# DEMANDE DE BREVET EUROPEEN

(11) **EP 0 679 558 A1**
(43) Date de publication de la demande: **02.11.1995**
(21) Numéro de dépôt: 95400696.1
(22) Date de dépôt: 29.03.1995
(51) Int. Cl.: B60R 25/10, G08B 25/00

(54) **Détection de véhicule**

(30) Priorité: 26.04.1994 FR 9405023
(71) Demandeur: Société d'Etudes de Téléinformatique et Communications Systèmes, S.E.T.I.C.S., F-75013 Paris (FR)
(72) Inventeur: Chavanat, Paul, F-91290 Ollainville (FR)
(74) Mandataire: Cabinet Martinet & Lapoux

(57) **Abrégé**

Un dispositif pour détecter un véhicule (VE) comprend un premier circuit électronique de traitement de données (1) interne au véhicule (VE) pour transmettre des données fonction d'un état normal ou anormal d'utilisation du véhicule à travers des moyens de couplage (15, 16; 25, 26) à un second circuit de traitement de données (2) externe au véhicule (VE) en réponse à un mot d'interrogation (M1) émis par le second circuit de traitement. Le premier circuit (1) est relié à des circuits périphériques électroniques classiques (CPₙ) du véhicule (VE) pour détecter automatiquement un état normal ou anormal d'utilisation du véhicule. L'état normal ou anormal est en outre visualisé par une ampoule témoin (17).

## Description

La présente invention a trait à un dispositif pour lutter contre le vol de véhicules, et plus particulièrement pour détecter un véhicule volé.

Un tel dispositif connu pour détecter puis identifier et localiser un véhicule volé comprend par exemple un circuit électronique incluant une mémoire dans laquelle sont mémorisées des données identifiant le véhicule, un émetteur pour émettre un signal porteur des données d'identification et un circuit d'alimentation électrique. Le circuit électronique est dissimulé dans le véhicule et émet les données identifiant le véhicule. Le dispositif comprend également une pluralité de récepteurs placés à proximité de lieux de passage de véhicules, tels que péages autoroutiers ou postes frontières, de manière à recevoir les données émises par les circuits électroniques dissimulés dans les véhicules circulant dans la zone de réception de récepteurs. Les données reçues sont alors transmises vers une station centrale de traitement dans laquelle sont également enregistrées les déclarations de vol de véhicule. La station centrale compare les données reçues depuis chaque récepteur à celles des véhicules déclarés volés pour localiser les véhicules déclarés volés.

En pratique, ce dispositif est capable de détecter un véhicule volé dès que la déclaration du vol a été enregistrée dans la station centrale. La procédure de recherche d'un véhicule volé au moyen de ce dispositif sera d'autant plus efficace que la déclaration du vol du véhicule est effectuée très rapidement après le vol. Ensuite la déclaration doit être enregistrée également très rapidement dans la station centrale de traitement pour être comparée aux données reçues depuis les récepteurs. Or, dans de nombreux cas, un véhicule volé n'est déclaré comme tel, plusieurs heures après le vol, ce qui laisse le temps au voleur de parcourir une très grande distance ou de rechercher le circuit électronique dans le véhicule et de le neutraliser.

La présente invention vise à remédier aux inconvénients de la technique antérieure en fournissant un dispositif pour détecter un véhicule, notamment un véhicule volé, qui fonctionne automatiquement dès le vol de véhicule.

A cette fin, un dispositif pour détecter un véhicule
comprenant un premier moyen de traitement de données interne au véhicule pour transmettre des données fonction d'un état normal ou anormal d'utilisation du véhicule à travers des moyens de couplage à un second moyen de traitement de données externe au véhicule en réponse à un mot d'interrogation émis par le second moyen de traitement,
est caractérisé en ce que le premier moyen de traitement de données est relié à des moyens périphériques dans le véhicule chacun pour y détecter un état normal ou anormal de fonctionnement respectif afin d'imposer à une variable logique une valeur déterminée dès que l'un desdits moyens périphériques détecte un état anormal de fonctionnement, et en ce que le premier moyen de traitement de données comprend un premier moyen pour produire un mot comprenant la variable logique et un mot d'identification du véhicule, en réponse à au moins ledit mot d'interrogation produit par un second moyen pour produire compris dans le second moyen de traitement, et transmis via les moyens de couplage.

La valeur de la variable logique est déterminée périodiquement ou à chaque démarrage du moteur du véhicule, de manière automatique. De même, la transmission des données du premier vers le second moyen de traitement de données est automatique.

Il y a ainsi un échange de données entre les premier et second moyens de traitement de données.

Avantageusement, les moyens de couplage comprennent des premier et second moyens photorécepteurs et des premier et second moyens photoémetteurs reliés respectivement aux premier et second moyens de traitement de données, et sont de préférence inclus dans des feux de signalisation de véhicule. En particulier, les moyen de couplage comprennent
des premiers moyens récepteur et émetteur reliés au premier moyen de traitement de données et inclus dans un feu arrière, respectivement avant du véhicule, et
des seconds moyens récepteur et émetteur reliés au second moyen de traitement de données, et inclus dans un feu avant, respectivement arrière d'un véhicule de surveillance contenant le second moyen de traitement de données. Dans ces conditions les moyens photorécepteur et photodétecteur sont logés dans une même zone pour tous les véhicules, quelles que soient leurs forme et dimension.

Selon une variante de réalisation, le premier moyen de traitement de données comprend en outre un témoin visuel pour indiquer l'état normal ou anormal d'utilisation du véhicule. Le témoin est une ampoule lumineuse qui est allumée en cas d'état normal d'utilisation de véhicule et éteinte sinon.

L'invention a également trait à un procédé de détection de véhicule mis en oeuvre dans le dispositif. Le procédé comprend
dans un premier moyen de traitement de données inclus dans chaque véhicule les étapes de
recevoir un premier mot d'interrogation produit par un second moyen de traitement de données localisé à l'extérieur dudit chaque véhicule,
émettre en réponse au premier mot un premier mot de réponse comprenant la valeur d'une variable logique représentative d'un état normal ou anormal du fonctionnement de l'un de moyens périphériques dans ledit chaque véhicule, pendant un intervalle de temps prédéterminé ou jusqu'à recevoir un second mot d'interrogation du second moyen de traitement de données, et
lorsque le premier moyen de traitement de données reçoit le second mot d'interrogation, émettre en réponse au second mot un mot d'identification dudit chaque véhicule, et
dans le second moyen de traitement de données les étapes de
émettre périodiquement le premier mot d'interrogation,
recevoir en réponse audit premier mot d'interrogation le premier mot de réponse comprenant la valeur de la variable logique dudit chaque véhicule,
émettre le second mot d'interrogation si la valeur de la variable logique indique un état anormal de fonctionnement dudit chaque véhicule,
recevoir en réponse au second mot d'interrogation le mot d'identification dudit chaque véhicule, et
mémoriser le mot d'identification dudit chaque véhicule.

Le procédé comprend en outre dans le premier moyen de traitement de donnés dudit chaque véhicule les étapes de :
interroger cycliquement les moyens périphériques dudit chaque véhicule pour en déterminer un état normal ou anormal de fonctionnement dudit chaque véhicule,
déterminer la valeur de la variable logique en fonction de l'état, et
mémoriser la valeur de la variable logique afin de la lire en réponse au premier mot d'interrogation.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme d'un dispositif de détection de véhicule selon l'invention ;
- la figure 2 est un algorithme de détermination d'une variable logique en fonction de l'état d'utilisation normal ou anormal du véhicule ;
- la figure 3 est un algorithme d'interrogation d'un véhicule ; et
- la figure 4 est un algorithme d'identification du véhicule.

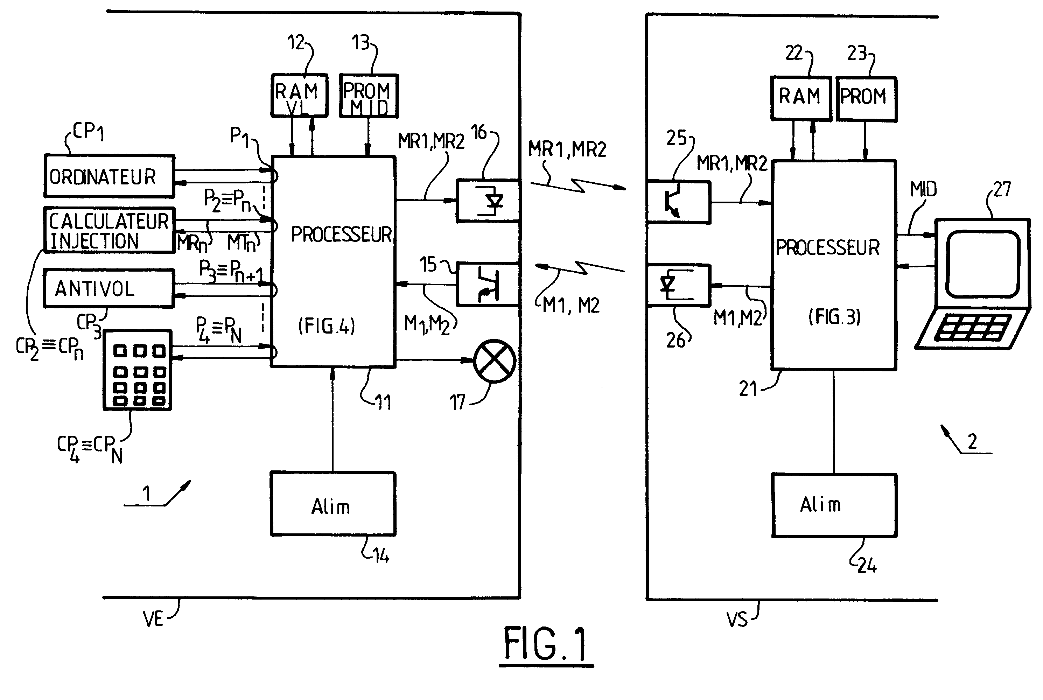

En référence à la figure 1, un dispositif de détection de véhicule selon l'invention comprend un premier circuit électronique de traitement de données 1 qui est installé dans un véhicule d'usager à détecter VE et un second circuit électronique de traitement de données 2 qui est installé dans un véhicule de surveillance VS, par exemple un véhicule de police, qui se déplace dans la circulation, ou est installé de manière fixe et invisible par exemple à un péage autoroutier, ou dans une station d'essence. Comme détaillé dans la suite, le rôle principal du circuit 1 est d'identifier le véhicule VE et de transmettre des données d'identification du véhicule, tandis que le rôle du circuit 2 est d'interroger des circuits 1 de véhicules et d'analyser les données d'identification éventuellement transmises. En pratique, une pluralité de circuits 2 sont installés fixes ou mobiles pour surveiller des lieux de passage de véhicules.

Le circuit 1 comprend essentiellement un microprocesseur 11, une mémoire RAM 12 et une mémoire PROM 13.

Des ports d'entrée/sortie P₁ à P_{N} du microprocesseur 11, avec N entier positif, sont reliés à des circuits périphériques électroniques CP₁ à CP_{N} équipant classiquement le véhicule VE. A titre d'exemple, N=4 circuits périphériques sont illustrés dans la figure 1. Le circuit CP₁ est un ordinateur de bord, le circuit CP₂ est un calculateur d'injection, le circuit CP₃ est un circuit antivol et le circuit CP_{N} = CP₄ est un pavé numérique. En pratique, le nombre de circuits périphériques relié aux ports du microprocesseur 11 est compris entre 1 et 10, et est déterminé pour chaque véhicule VE en dépendance des fonctions et commandes électroniques qu'il comprend.

Le microprocesseur 11 est d'autre part relié à un moyen photorécepteur de type photodiode PIN 15 et à un moyen photoémetteur sous la forme d'une diode électroluminescente 16 éventuellement associée à un amplificateur d'attaque. Les moyens photorécepteur et photoémetteur 15 et 16 couplent les circuits 1 et 2 afin que ces derniers échangent des données, comme cela apparaît dans la suite.

Les diodes d'émission et réception 15 et 16 sont positionnées sensiblement à l'extérieur de l'habitacle du véhicule VE. En pratique, tous les véhicules équipés du circuit 1 ont des diodes 15 et 16 sensiblement installés au même emplacement. Cette condition est assurée malgré la diversité des formes et dimensions de véhicule en plaçant les diodes 15 et 16 dans un feu de signalisation du véhicule, dont les emplacements sont compris dans des plages normalisées en hauteur et latéralement par rapport au véhicule. Par exemple, les diodes 16 et 15 sont placées dans le feu de stop arrière gauche, ou dans un feu de stop "supplémentaire" placé au niveau de la lunette arrière conformément à la règlementation de nombreux pays. Les diodes émettent et reçoivent des signaux vers et depuis l'arrière du véhicule.

En variante, le circuit 1 comprend en outre un témoin visuel dont le rôle sera précisé dans la suite. Selon une réalisation préférée, le témoin est une ampoule lumineuse 17 dont l'allumage est commandé par le microprocesseur 11. L'ampoule 17 est fixée dans le véhicule VE de manière à être visible depuis l'extérieur du véhicule, par exemple à proximité des diodes 15 et 16 dans un feu de signalisation du véhicule. Dans ce cas, l'ampoule 17 est d'une couleur différente des couleurs habituelles des feux de signalisation et est par exemple verte.

Le circuit 1 est réalisé sous la forme d'un boîtier de petite taille inséré dans le feu de signalisation. En variante, le circuit 1 fait partie de l'ordinateur de bord du véhicule et seulement les diodes 15 et 16 et l'ampoule 17 sont dans le feu de signalisation.

Un circuit d'alimentation électrique 14 fournit la puissance électrique au circuit 1 qui est de l'ordre de quelques milliwatts à quelques watts. Le circuit 14 est lui-même alimenté par une source d'énergie qui est la batterie du véhicule et comprend principalement un convertisseur de tension continu et un régulateur de tension. En variante, l'alimentation du circuit 1 est réalisée par une pile, ou comprend une pile ou un accumulateur d'énergie comme moyen d'alimentation de secours lorsque le circuit 14 est débranché de la batterie ou lorsque celle-ci est défaillante.

Le circuit électronique 2 comprend essentiellement un microprocesseur 21, une mémoire RAM 22 et une mémoire PROM 23.

Le microprocesseur 21 est relié à un moyen d'interface 27 avec un opérateur comprenant un écran d'affichage et/ou un clavier alphanumérique, par exemple ceux d'un micro-ordinateur, bien que le circuit 2 puisse avoir la taille d'une calculette de poche ou d'une télécommande domestique.

En outre, le microprocesseur 21 est relié à un moyen photorécepteur 25 et un moyen photoémetteur 26 respectivement analogues aux diodes 15 et 16. Les diodes 16 et 26 émettent un faisceau infrarouge de préférence légèrement divergent.

Un circuit d'alimentation 24 alimente le circuit 2. Selon la réalisation préférée selon laquelle le circuit 2 est installé dans le véhicule de surveillance VS, le circuit 24 est analogue au circuit 14 et les diodes 25 et 26 sont installées à l'avant du véhicule, par exemple dans un phare, de sorte que les diodes 25 et 26 soient en regard des diodes 15 et 16 équipant le véhicule VE lorsque le véhicule de surveillance VS suit le véhicule VE sur une voie de circulation. La portée d'émission et de réception des diodes est d'environ dix à vingt mètres.

Lorsque le circuit 2 est installé de manière fixe à proximité d'une voie de circulation, les diodes 25 et 26 sont positionnées pour être en regard des diodes 15 et 16 du véhicule VE, par exemple lorsque ce dernier est arrêté dans l'un des couloirs d'un péage autoroutier.

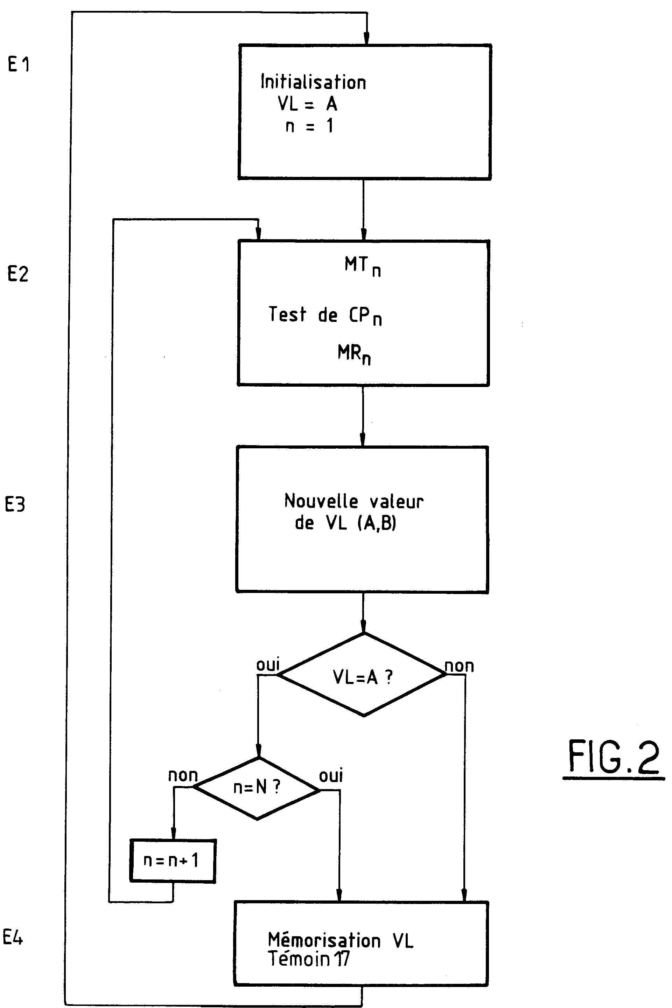

En référence à la figure 2, le circuit 1 détermine la valeur d'une variable logique VL en fonction de l'utilisation normale et licite du véhicule VE ou de son utilisation anormale, c'est-à-dire après "forçage" du véhicule par effraction notamment. La détermination de la valeur de la variable VL est effectuée cycliquement suivant un algorithme mémorisé en mémoire PROM 13 et comprenant quatre étapes E1 à E4 afin de sonder cycliquement les circuits périphériques CP₁ à CP_{N}.

L'étape E1 initialise la valeur de la variable VL à une valeur A ce qui correspond à l'utilisation licite du véhicule, et un paramètre n à 1.

Les étapes E2 et E3 sont effectuées successivement pour n variant de 1 à N.

A l'étape E2, le microprocesseur 11 teste le circuit périphérique CPₙ relié au port Pₙ en lui transmettant un mot de test prédéterminé MTₙ. En réponse, le circuit concerné CPₙ transmet un mot de réponse MRₙ indiquant un état normal de fonctionnement ou un état anormal. Chaque état normal ou anormal dépend de la fonction assurée par le circuit CPₙ dans le véhicule VE. Ainsi par exemple, le pavé numérique CP₄ est dans un état normal si le conducteur du véhicule a composé un code secret prédéterminé sur les touches du pavé avant le démarrage du moteur du véhicule, et dans un état anormal si le démarrage du moteur a eu lieu sans le code secret préalable.

A la réception du mot de réponse MRₙ, l'étape E3 modifie la valeur de la variable VL en fonction de la réponse. Si la réponse indique un état normal du circuit interrogé CPₙ, alors la variable VL demeure égale à A ; en revanche, si la réponse indique un état anormal, alors la variable VL est mise à une valeur B correspondant à l'utilisation illicite du véhicule. Si la variable VL vaut A et si tous les circuits électroniques reliés aux ports Pₙ n'ont pas été testés, alors l'algorithme passe à l'étape E2 pour tester le circuit suivant CPₙ₊₁ . Si la variable VL vaut B ou si tous les équipements ont été testés, l'algorithme passe à l'étape E4.

L'étape E4 écrit la valeur de la variable VL dans la mémoire RAM 12 et allume l'ampoule lumineuse 17 si la variable VL vaut A et éteint l'ampoule 17 si la variable VL vaut B. Ainsi, l'ampoule 17 indique que le véhicule VE est dans un état normal, respectivement anormal, lorsque l'ampoule 17 est allumée, respectivement éteinte. En outre, l'ampoule 17 est un témoin de bon fonctionnement du circuit 1 et du circuit d'alimentation électrique 14. Par exemple, en cas de défaut de fonctionnement du circuit d'alimentation électrique 14, le circuit 1 et par conséquent l'ampoule 17 ne sont plus alimentés et cette dernière demeure éteinte. Comme déjà dit, les étapes E1 à E4 sont effectuées cycliquement, avec un cycle de quelques secondes, ou seulement lors du démarrage du moteur du véhicule.

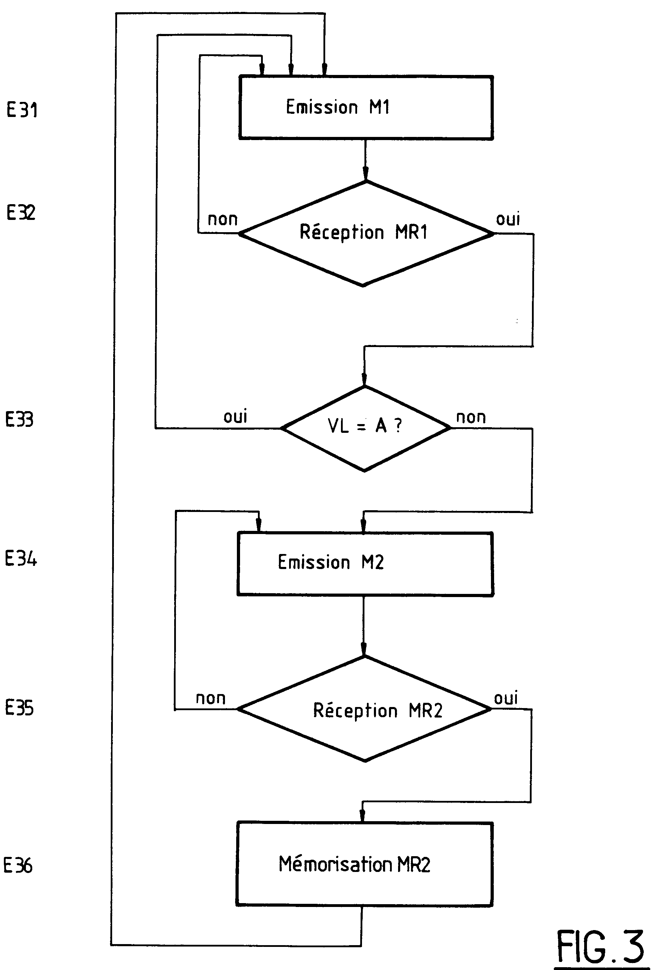

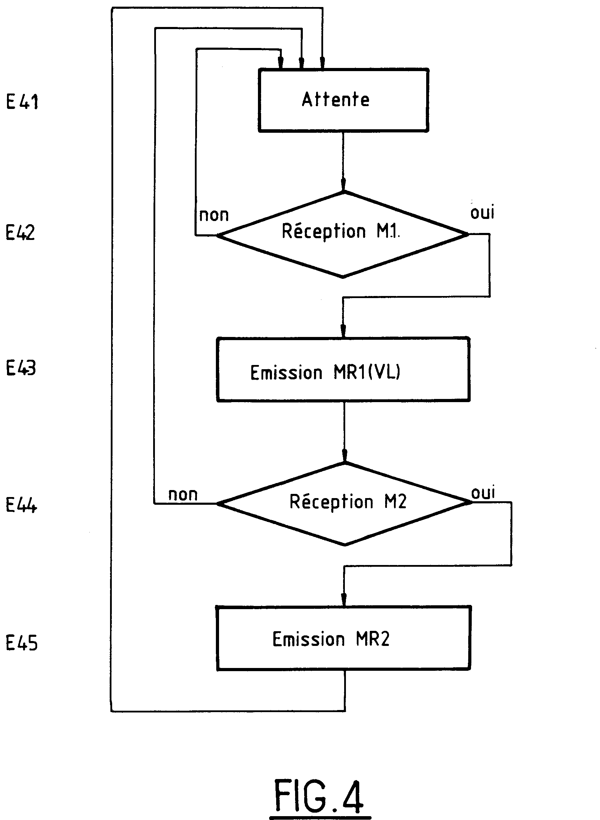

Selon les figures 3 et 4, l'échange de données entre les circuits 1 et 2 est bidirectionnel. Un algorithme d'interrogation est mémorisé en mémoire PROM 23 du circuit 2 et comprend six étapes principales E31 à E36. Un algorithme d'identification est mémorisé en mémoire PROM 13 du circuit 1 et comprend cinq étapes principales E41 à E45.

A l'étape E31, un premier mot d'interrogation M1 mémorisé en mémoire 23 est émis périodiquement par la diode 26.

Le circuit 1 est initialement en attente à l'étape E41. Lorsque la diode 26 est en regard de la diode 15 du véhicule VE, le circuit 1 du véhicule VE passe à l'étape E42 et reçoit alors le mot d'interrogation M1 par l'intermédiaire de la diode 15. En réponse, le circuit 1 émet à l'étape E43 par l'intermédiaire de la diode 16 un premier mot de réponse MR1 contenant la valeur de la variable VL lue dans la mémoire 12. Le mot MR1 est émis périodiquement pendant un intervalle de temps prédéterminé. En pratique, le temps écoulé entre la réception du mot d'interrogation M1 par la diode 15 et l'émission du mot de réponse MR1 est très bref, typiquement de l'ordre de quelques centaines de millisecondes. Par conséquent les diodes 16 et 25 sont toujours en regard bien que les véhicules VE et VS soient tous les deux en déplacement. Le circuit 2 reçoit alors à l'étape E32 le mot MR1 et par conséquent la variable VL.

A l'étape E33, si la variable VL extraite du mot reçu MR1 dans par le circuit 2 est égale à A, alors le circuit 2 retourne à l'étape E31 et continue à émettre le mot d'interrogation M1 périodiquement.

Si le circuit 2 reconnait une valeur de variable VL égale à B, cela signifie que le véhicule VE contenant le circuit 1 ayant émis le mot de réponse MR1 est dans un état anormal. Dans ce cas, le circuit 2 n'émet pas le mot M1 et passe à l'étape E34 pour émettre un second mot d'interrogation M2 via la diode 26, de préférence périodiquement pendant un intervalle de temps prédéterminé.

Le mot M2 est reçu à l'étape E44 par le circuit 1 via la diode 15. A l'étape E45, le circuit 1 émet alors un second mot de réponse MR2 qui comprend la variable VL et un mot d'identification MID du véhicule VE lu en mémoire PROM 13. Le mot MID identifie le véhicule VE, par exemple avec son numéro d'immatriculation et/ou son numéro de série, de préférence accompagné de la marque et du type de véhicule, et/ou un code secret attribué au véhicule VE.

Le mot de réponse MR2 est reçu à l'étape E35 par le circuit 2 qui le mémorise en mémoire RAM 22 à l'étape E36. L'algorithme repasse alors à l'étape E31 pour émettre à nouveau le premier mot d'interrogation M1. De même, le circuit 1 revient à l'étape initiale d'attente E41 après une temporisation s'il ne reçoit pas le mot M2 à l'étape E44, ainsi qu'après l'émission du mot MR2 à l'étape E45.

Dans le circuit 2, le mot d'identification MID est alors appliqué au circuit 27 pour affichage sur l'écran de visualisation et/ou déclencher une alarme sonore ou visuelle. En variante lorsque le circuit 2 est fixe, le mot MID et un mot de localisation MLO indiquant la localisation du circuit 2 sont transmis par un moyen tel que modem vers une station centrale de traitement.

En variante, lorsque le circuit 1 reçoit le premier mot M1, il émet un mot de réponse contenant la variable VL et l'identification du véhicule. Lorsque le circuit 2 reçoit le mot de réponse, il mémorise ce dernier si la variable VL vaut B et ensuite effectue un traitement analogue à celui précédemment décrit sur l'identification du véhicule.

Selon une autre variante, lorsque le circuit 1 reçoit le mot M1, il émet un mot de réponse contenant seulement la variable VL si cette dernière vaut la valeur A indiquant un état normal d'utilisation du véhicule, ou la variable VL et l'identification du véhicule si la variable VL vaut la valeur B indiquant un état anormal d'utilisation du véhicule. Lorsque le circuit 2 reçoit le mot de réponse, il mémorise ce dernier si la variable VL vaut B et la suite du traitement est analogue à la description précédente.

## Revendications

**1 -** Dispositif pour détecter un véhicule (VE), comprenant un premier moyen de traitement de données (1) interne au véhicule (VE) pour transmettre des données fonction d'un état normal ou anormal (VL) d'utilisation du véhicule à travers des moyens de couplage (15, 16; 25, 26) à un second moyen de traitement de données (2) externe au véhicule (VE) en réponse à un mot d'interrogation (M1) émis par le second moyen de traitement,
caractérisé en ce que le premier moyen de traitement de données (1) est relié à des moyens périphériques (CPₙ) dans le véhicule (VE) chacun pour y détecter un état normal ou anormal de fonctionnement respectif afin d'imposer à une variable logique (VL) une valeur déterminée dès que l'un desdits moyens périphériques détecte un état anormal de fonctionnement, et en ce que le premier moyen de traitement de données (1) comprend un premier moyen (11) pour produire un mot (MR1;MR2) comprenant la variable logique (VL) et un mot d'identification (MID) du véhicule (VE), en réponse à au moins ledit mot d'interrogation (M1;M2) produit par un second moyen pour produire (21) compris dans le second moyen de traitement (2), et transmis via les moyens de couplage (15, 16; 25, 26).

**2 -** Dispositif conforme à la revendication 1, caractérisé en ce que les moyens de couplage comprennent des premier et second moyens photorécepteurs (15;25) et des premier et second moyens photoémetteurs (16;26) reliés respectivement aux premier et second moyens de traitement de données (1,2).

**3 -** Dispositif conforme à la revendication 1 ou 2, dans lequel les moyens de couplage (15, 16; 25, 26) sont inclus dans des feux de signalisation de véhicule.

**4 -** Dispositif conforme à la revendication 1, dans lequel les moyens de couplage comprennent
des premiers moyens récepteur et émetteur (15,16) reliés au premier moyen de traitement de données (1) et inclus dans un feu arrière, respectivement avant du véhicule (VE), et
des seconds moyens récepteur et émetteur (25,26) reliés au second moyen de traitement de données (2) et inclus dans un feu avant, respectivement arrière d'un véhicule de surveillance (VS) contenant le second moyen de traitement de données (2).

**5 -** Dispositif conforme à l'une quelconque des revendications 1 à 4, dans lequel le premier moyen de traitement de données (1) comprend en outre un témoin visuel (17) pour indiquer l'état normal ou anormal d'utilisation du véhicule.

**6 -** Procédé de détection de véhicules (VE) mettant en oeuvre le dispositif conforme à l'une quelconque des revendications 1 à 5, caractérisé en ce qu'il comprend
dans un premier moyen de traitement de données (1) inclus dans chaque véhicule (VE) les étapes de
recevoir (E42) un premier mot d'interrogation (M1) produit par un second moyen de traitement de données (2) localisé à l'extérieur dudit chaque véhicule (VE),
émettre (E43) en réponse au premier mot (M1) un premier mot de réponse (MR1) comprenant la valeur d'une variable logique (VL) représentative d'un état normal ou anormal du fonctionnement de l'un de moyens périphériques (CP₁ - CP_{N}) dans ledit chaque véhicule (VE), pendant un intervalle de temps prédéterminé ou jusqu'à recevoir (E44) un second mot d'interrogation (M2) du second moyen de traitement de données (2), et
lorsque le premier moyen de traitement de données (1) reçoit le second mot d'interrogation, émettre en réponse au second mot (M2) un mot d'identification dudit chaque véhicule (MR2,MID), et
dans le second moyen de traitement de données (2) les étapes de
émettre périodiquement (E31) le premier mot d'interrogation (M1),
recevoir (E32) en réponse audit premier mot d'interrogation le premier mot de réponse (MR1) comprenant la valeur de la variable logique (VL) dudit chaque véhicule (VE),
émettre (E34) ledit second mot d'interrogation (M2) si la valeur de la variable logique indique un état anormal de fonctionnement dudit chaque véhicule (VE),
recevoir (E35) en réponse audit second mot d'interrogation (M2) le mot d'identification (MR2, MID) dudit chaque véhicule (VE), et
mémoriser (E36) le mot d'identification dudit chaque véhicule (VE).

**7 -** Procédé conforme à la revendication 6, caractérisé en ce qu'il comprend dans ledit premier moyen de traitement de donnés (1) dudit chaque véhicule (VE) les étapes de
interroger (E2) cycliquement lesdits moyens périphériques (CP₁ - CP_{N}) dudit chaque véhicule pour en déterminer un état normal ou anormal de fonctionnement dudit chaque véhicule,
déterminer (E3) la valeur de la variable logique (VL) en fonction dudit état, et
mémoriser (E4) la valeur de la variable logique afin de la lire en réponse audit premier mot d'interrogation (M1).
